Europäisches Patentamt

European Patent Office

Office européen des brevets

(11) Veröffentlichungsnummer: **0 447 648 A1**

## (12) EUROPÄISCHE PATENTANMELDUNG

(21) Anmeldenummer: 90124501.9

(51) Int. Cl.5: **B23F 21/16**

(22) Anmeldetag: 18.12.90

(30) Priorität: 20.03.90 DE 4008833

(43) Veröffentlichungstag der Anmeldung:
25.09.91 Patentblatt 91/39

(84) Benannte Vertragsstaaten:
ES FR GB IT SE

(71) Anmelder: MERCEDES BENZ AG
Mercedesstrasse 137
W-7000 Stuttgart 60(DE)

(72) Erfinder: Roll, Peter
Tiefenbachstrasse 93
W-7000 Stuttgart(DE)
Erfinder: Welsch, Thomas
Schildfranweg 19
W-7000 Stuttgart(DE)

(54) Wälzfräser.

(57) Die Erfindung betrifft einen Wälzfräser zum Fräsen von Außenverzahnungen, insbesondere in der Großserienfertigung. Zur Erhöhung der Standzeit eines solchen Wälzfräsers sind die Einzelzähne (1) unter Verzicht auf eine mehrmalige Nachschleifbarkeit in Umfangsrichtung sehr kurz (L) und ebenso die Spannuten in Umfangsrichtung sehr schmal (6) ausgebildet, sodaß die Umfangsteilung (T) der Einzelzähne (1) des Wälzfräsers innerhalb einer Schraubenganglinie höchstens etwa 1,6-mal so groß ist wie die achsiale Zahnteilung (t) innerhalb der Zahnreihen (2). Die Einzelzähne (1) können in Umfangsrichtung etwa so kurz (1) gehalten werden, als für die schnittkraftbedingte Zahnfestigkeit erforderlich ist. Die Freiwinkel im Kopfbereich und im Flankenbereich können jeweils zerspanungstechnologisch optimal gewählt werden. Die zerspanungswirksame Umfangsfläche des Wälzfräsers, also Durchmesse (D) r und/oder Länge (L), werden möglichst groß gestaltet. Dank der dadurch gegebenen Möglichkeit einer Unterbringung sehr vieler, relativ kleiner Schneidzähne (1) ergibt sich eine sehr geringe Zahnbelastung und dadurch eine im Ausmaß überraschend große Steigerung der Standzeit; der Mehrpreis solcher Wälzfräser macht sich innerhalb der Fräserlebensdauer mehrfach bezahlt.

Fig. 1

Die Erfindung betrifft einen Wälzfräser nach dem Oberbegriff von Anspruch 1, wie er nicht nur im Handel und der industriellen Praxis, sondern auch aus zahlreichen Druckschriften bekannt ist, von denen lediglich beispielshalber das deutsche Normenblatt DIN 8000 stellvertretend genannt sei.

In der Großserienfertigung von Zahnrädern spielt die Standzeit der Fräser eine erhebliche Rolle, weil ein stumpfgewordener Wälzfräser aus der Fräsmaschine herausgenommen und gegen einen scharf nachgeschliffenen Wälzfräser ausgetauscht werden muß. Diese Betriebsunterbrechung sowie das Nachschleifen selber verursachen Kosten, die sich im Laufe der Zeit zu erheblichen Beträgen akkumulieren.

Aufgabe der Erfindung ist es, den gattungsgemäß zugrundegelegten Wälzfräser dahingehend weiterzubilden, daß die Standzeit erhöht und die mit einer geringen Standzeit zusammenhängenden Kosten reduziert werden.

Diese Aufgabe wird erfindungsgemäß durch die kennzeichnenden Merkmale von Anspruch 1 gelöst. Dank der Erhöhung der Anzahl von Einzelzähnen unter Verzicht auf eine mehrmalige Nachschleifbarkeit wird erstaunlicherweise die Standzeit des Wälzfräsers auf etwa das zehn- bis zwanzigfache gegenüber herkömmlichen Wälzfräsern erhöht; die Kosten für den erfindungsgemäßen Wälzfräser erhöhen sich gegenüber herkömmlichen Wälzfräsern jedoch nur etwa auf das 1,5-fache. Es können also dank der erhöhten Standzeit die Kosten für etwa 10 bis 20 Nachschliffe bei nur relativ geringem Investitionsaufwand eingespart werden. Diese Kosten haben sich spätestens nach 14 Tagen amortisiert.

Weitere zweckmäßige Ausgestaltungen der Erfindung können den Unteransprüchen entnommen werden. Im übrigen ist die Erfindung anhand eines in den Zeichnungen dargestellten Ausführungsbeispieles nachfolgend noch erläutert; dabei zeigen:

Fig. 1 eine achsparallele Stirnansicht auf einen Wälzfräser und

Fig. 2 eine Umfangsansicht auf den Wälzfräser nach Fig 1.

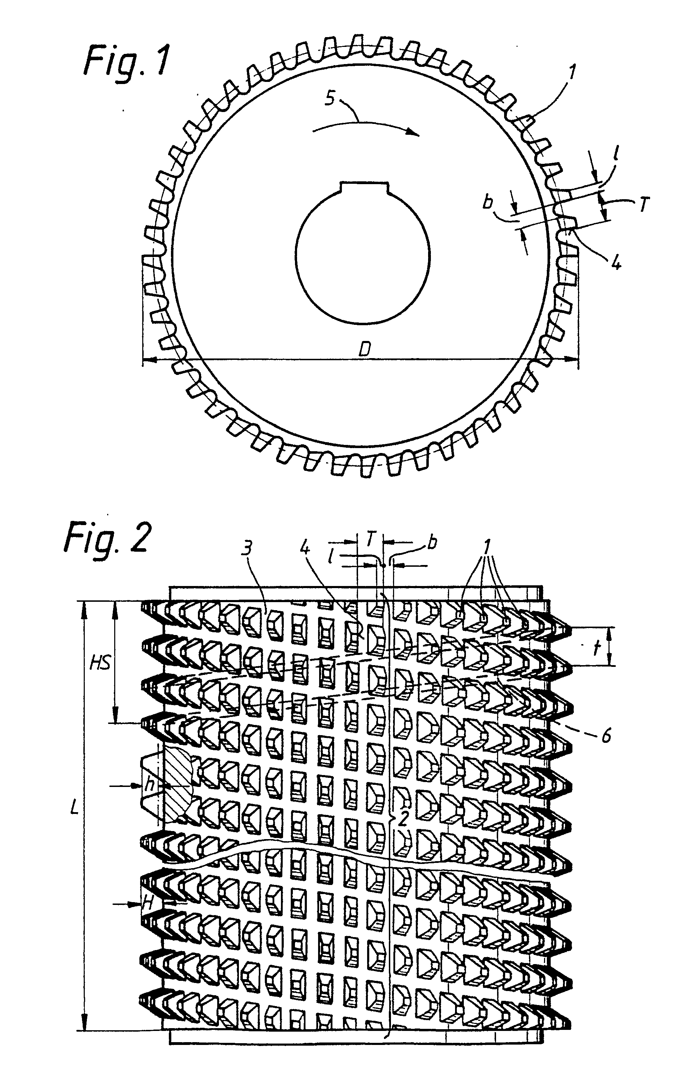

Der in den Figuren dargestellte Wälzfräser dient zum Fräsen von Außenverzahnungen in der Großserienfertigung, beispielsweise von Planetenrädern für automatische Kraftfahrzeuggetriebe. Der Wälzfräser weist an seinem Umfang mehrere achsial ausgerichtete Zahnreihen 2 aus vielen Einzelzähnen 1 auf, die an ihrer in Drehrichtung 5 vorauslaufenden Kante eine Schneidkante 4 aufweisen. Jede der Zahnreihen 2 ist von der benachbarten Zahnreihe durch eine parallel dazu verlaufende Spannut 3 getrennt. Beim dargestellten Ausführungsbeispiel verlaufen die Zahnreihen 2 und die Spannuten 3 achsparallel; es ist jedoch ohne weiteres auch möglich, daß die Zahnreihen und die entsprechenden Spannuten einen spitzen Winkel zu den Mantellinien des Hüllzylinders des Wälzfräsers einschließen. Die Schneidkante 4 eines jeden Einzelzahnes 1 bestreicht das gesamte Zahnprofil der herzustellenden Zahnradverzahnung, deren Zahnhöhe h in Fig. 2 angedeutet ist. Die Zahnhöhe H der Einzelzähne des Wälzfräsers ist demgegenüber ebenfalls eingezeichnet, wobei die Fräser-Zahnhöhe H gleich oder größer sein kann als die Zahnrad-Zahnhöhe h. Jede Spannut 3 reicht bis unterhalb des Zahnfußes der Zahnreihen hinunter. Im übrigen sind die Einzelzähne 1 unterschiedlicher, in Umfangsrichtung benachbarter Zahnreihen entlang einer Schraubenganglinie 6 zueinander ausgerichtet. Der Wälzfräser ist gewissermaßen nach Art einer Schraube ausgebildet, wobei das in Fig. 2 am Rand erkennbare "Gewinde"-Profil dem Bezugsprofil für die herzustellende Zahnradverzahnung entspricht. Beim Abwälzfräsen "verschraubt" sich der Wälzfräser in der herzustellenden Verzahnung, wobei je Umdrehung des Wälzfräsers das herzustellende Zahnrad um soviel Zähne weitergedreht wird, als der Wälzfräser Schraubengänge 6 aufweist.

Um in standzeiterhöhender Wirkung möglichst viele Zahnreihen 2 am Umfang des Wälzfräsers unterbringen zu können, sind die Einzelzähne 1 unter Verzicht auf eine mehrmalige Nachschleifbarkeit in Umfangsrichtung sehr kurz gehalten - Maß 1; ebenso sind die Spannuten 3 in Umfangsrichtung sehr schmal - Maß b - ausgebildet. Dadurch ist die Umfangsteilung T der Einzelzähne 1 innerhalb einer Schraubenganglinie 6 beim dargestellten Ausführungsbeispiel geringfügig kleiner als die achsiale Zahnteilung t innerhalb der Zahnreihen 2, welche Zahnteilung auch der herzustellenden Verzahnung entspricht. Bei dieser extrem geringen Umfangsteilung T der Einzelzähne 1 in Relation zur Achsialteilung t des Bezugsprofiles - im dargestellten Ausführungsbeispiel beträgt die Umfangsteilung T lediglich etwa 80 Prozent der Achsialteilung t - dürfte die Obergrenze zur Steigerung der Anzahl der Einzelzähne bei vorgegebenem Fräserdurchmesser D liegen. Bei einer weiteren Steigerung der Anzahl der Einzelzähne müßte die Umfangsteilung T noch geringer werden, was auf eine noch stärkere Verkürzung der Einzelzähne - Maß 1 - und auf eine noch stärkere Verschmälerung - Maß b - der Spannuten hinausliefe. Die Einzelzähne müssen sich in Umfangsrichtung mit dem Maß 1 wenigstens so weit erstrecken, als dies für die schnittkraftbedingte Zahnfestigkeit erforderlich ist. Auch für die Spannuten 3 ist ein gewisses Mindestmaß der Breite b nötig, damit die anfallenden Späne sicher darin aufgenommen werden können. Ein deutlich spürbarer Effekt der Standzeiterhöhung ist bereits dann gegeben, wenn die Umfangsteilung T der Einzelzähne 1 innerhalb einer Schraubenganglinie 6 etwa doppelt so groß ist, wie die achsiale Zahnteilung t innerhalb der Zahnreihen 2. Eine so große Umfangsteilung T ermöglicht auch eine größere Breite b der Spannuten 3 und eine größere Umfangserstreckung - Maß 1 - der Einzelzähne 1. Angestrebt wird, am Umfang möglichst viele Zähne unterzubringen. Es muß ein Kompromiß zwischen ausreichender Zahnfestigkeit und ausreichend dimensionierter Spannut einerseits und einer möglichst engen Umfangsteilung der Zähne gefunden werden. Das Optimum in dieser Hinsicht durfte bei Wälzfräsern erreicht sein, bei denen die Umfangsteilung dem 1,0 bis 1,6-fachen der Axialteilung entspricht.

Die überraschende Standzeiterhöhung des Wälzfräsers kommt dadurch zustande, daß aufgrund der hohen Schneidenzahl die Zerspanungsleistung je Zahn sehr gering ist. Erste Erfahrungen mit erfindungsgemäßen Wälzfräsern haben sogar gezeigt, daß dank dieser geringen Einzelzahnbelastungen die Vorschubgeschwindigkeit gesteigert werden kann. Letzteres wirkt sich unmittelbar produktivitätssteigernd aus. Trotz dieser Produktivitätssteigerungen geht jedoch die Standzeit der erfindungsgemäßen Wälzfräser nicht wesentlich zurück.

Grundsätzlich wirkt sich die Erhöhung der Anzahl der Einzelzähne im Sinne einer Steigerung der Standzeit des Wälzfräsers aus. Die Anzahl der Einzelzähne kann jedoch nicht nur durch eine Reduzierung der Umfangsteilung T gesteigert werden, sondern auch durch eine Vergrößerung der Umfangsfläche des Wälzfräsers. Auf einem größeren Umfang des Wälzfräsers können auch mehr Einzelzähne untergebracht werden. Ebenso können am Umfang des Wälzfräsers mehr Einzelzähne untergebracht werden, wenn der Fräser in Achsrichtung länger ausgebildet wird. Insgesamt kann also die Standzeit des Wälzfräsers erhöht werden, wenn die zerspanungswirksame Umfangsfläche des Wälzfräsers, also sein Durchmesser D und/oder seine achsiale Länge L möglichst groß gestaltet werden. Eine Vergrößerung des Fräserdurchmessers bewirkt nicht nur eine Erhöhung der Anzahl der Einzelzähne, sondern auch eine Verlängerung der Abkühlzeiten zwischen zwei Schnitten eines Einzelzahnes, so daß auch dieser Einfluß standzeiterhöhend wirken kann. Zwar wird ein größerer Wälzfräser teurer werden als ein kleinerer Fräser jedoch sind die Kostenvorteile bei der Nutzung eines größeren Fräsers wesentlich größer als der Preisunterschied eines kleineren Fräsers gegenüber einem größeren. Gewisse Grenzen bei der Durchmesservergrößerung bzw. bei der Vergrößerung der achsialen Länge des Wälzfräsers sind durch die Werkzeugmaschine und durch die Einspannmöglichkeiten des Zahnradrohlinges innerhalb der Werkzeugmaschine gegeben. Ein extrem großer Wälzfräser würde unter Umständen in die Werkstückeinspannung des Zahnradrohlinges hineinfräsen; es ist zu berücksichtigen, daß die Werkstücke möglichst kurz und schwingungssteif in der Werkzeugmaschine aufgenommen werden sollen. Auch in Achsrichtung kann der Wälzfräser nicht beliebig lang ausgebildet werden , weil auch insoweit durch die Eigensteifigkeit der Werkzeugmaschine im Bereich der Fräseraufnahme und seines Antriebes gewisse natürliche Grenzen gesetzt sind. Es ist aber ohne weiteres denkbar, daß, zumindest bei Neukonstruktionen von Wälzfräsmaschinen, erfindungsgemäße Fräser mit einem Durchmesser von 10 - 30 Zentimeter und einer Länge von 30 - 50 Zentimeter zur Herstellung von Zahnrädern mit einem Modul von 1 - 1,5 Milimeter zum Einsatz kommen könnten, wobei der Modul der Achsialteilung t geteilt durch die Kreiszahl $\pi$ entspricht. Derartig groß bemessene Wälzfräser für relativ feine Verzahnungen dürften auch im zweischichtigen Großserieneinsatz eine Standzeit von mehreren Monaten erwarten lassen.

Der Verzicht auf ein mehrmaliges Nachschleifen des Wälzfräsers eröffnet nicht nur die Möglichkeit einer Zähnezahlernöhung und damit einer in seinem Ausmaß überraschenden Standzeiterhöhung, sondern bietet außerdem die Möglichkeit, die Freiwinkel im Flankenbereich der Einzelzähne 1 unabhängig vom Freiwinkel im Kopfbereich jeweils nach zerspanungstechnologischen Gesichtspunkten optimal zu wählen. Bisher mußten in dieser Hinsicht unliebsame Kompromisse zwischen Kopf-Freiwinkel einerseits und Flanken-Freiwinkel andererseits vorgenommen werden, um auch nach mehrmaligem Nachschleifen stets noch das gleiche Gesamtprofil - in Fig. 2 am rechten und linken Außenrand erkennbar - aufrecht zu erhalten. Zwar kann auch bei freier Wahl des Kopf-Freiwinkels einerseits und des Flanken-Freiwinkels andererseits der Wälzfräser vielleicht noch einmal oder höchstens zweimal nachgeschliffen werden, wobei sich jedoch das angesprochene Bezugsprofil geringfügig ändert. Nachdem das Abwälzfräsen jedoch häufig ein grober Zerspanungs-Bearbeitungsvorgang ist, dem sich noch ein Schlicht-Zerspanungsvorgang anschließt, kann unter Umständen eine solche Veränderung des Bezugsprofiles in Kauf genommen werden.

Es ist anzumerken, daß trotz des angesprochenen Verzichtes auf ein mehrmaliges Nachschleifen des Wälzfräsers und selbst nach einem ein- oder zweimaligem Nachschleifen der stumpfgewordene Abwälzfräser keineswegs schrottreif sein muß. Vielmehr kann bei in Umfangsrichtung ausreichend langen Einzelzähnen - Maß 1 - ein Nachschleifen beim Wälzfräserhersteller durchaus aus Kostengründen noch vertretbar sein, wobei ein Nachschleifen der Einzelzähne jedoch im Flankenbereich und im Kopfbereich vorzugsweise vom Werkzeughersteller vorgenommen werden muß.

Es wurde bereits oben erwähnt, daß die Einzelzähne 1 in Umfangsrichtung entlang von Schraubenganglinien 6 ausgerichtet sind und daß hier mehrere, voneinander unabhängige Schraubenganglinien nach Art eines Mehrfachgewindes angeordnet sein können. Beim dargestellten Ausführungsbeispiel sind drei verschiedene Schraubenganglinien 6 mit einer Schraubenganghöhe HS angeordnet, die dem Dreifachen der achsialen Zahnteilung t entspricht. Eine höhere Anzahl von Schraubenganglinien kann dank der höheren Anzahl von Einzelzähnen am Umfang ohne weiteres zugelassen werden, ohne daß dadurch die Bearbeitungsqualität leidet. Bei einer höheren Anzahl von Schraubenganglinien wird die Abwälzgeschwindigkeit beim Fräsvorgang erhöht, was die Produktion steigert. Bei herkömmlichen Wälzfräsern ist eine Erhöhung der Anzahl der Schraubenganglinien mit einer Reduzierung der Fertigungsgenauigkeit verbunden, weil die Anzahl der Hüllschnitte zurückgeht. Dank der hohen Schneidenanzahl bei dem erfindungsgemäßen Wälzfräser ist dies jedoch nicht der Fall. Außerdem verlaufen die Schraubenganglinien 6 auch bei einer höheren Anzahl von Schraubenganglinien dank des relativ großen Durchmessers D des Wälzfräsers in einem relativ spitzen Winkel zur Umfangsrichtung, was ebenfalls günstig für die Fertigungsgenauigkeit ist. Es können also ohne wesentliche Einbuße an Fertigungsgenauigkeit ohne weiteres weit mehr als drei Schraubenganglinien zugelassen werden. Je größer der Fräserdurchmesser, um so mehr Schraubenganglinien können zugelassen werden; bei einem Fräserdurchmesser von etwa 200 mm erscheinen fünfzehn Schraubenganglinien durchaus noch realistisch.

**Patentansprüche**

1. Wälzfräser zum Fräsen von Außenverzahnungen, insbesondere in der Großserienfertigung,
   - mit mehreren am Umfang angebrachten, zumindest angenähert achsial ausgerichteten Zahnreihen,
   - deren jede durch je eine parallel zu den Zahnreihen verlaufende Spannut von der benachbarten Zahnreihe getrennt ist,
   - wobei jeder Einzelzahn einer Zahnreihe mit seiner Schneidkante das gesamte Zahnprofil bestreicht und jede Spannut bis unterhalb des Zahnfußes der Zahnreihen hinunter reicht und
   - wobei die Einzelzähne unterschiedlicher in Umfangsrichtung benachbarter Zahnreihen entlang einer Schraubenganglinie zueinander ausgerichtet sind,

   **dadurch gekennzeichnet,**
   - daß die Einzelzähne (1) der Zahnreihen (2) sich in Umfangsrichtung im wesentlichen lediglich so wenig erstrecken (Maß 1), als für die schnittkraftbedingte Zahnfestigkeit erforderlich ist und
   - daß ebenso die Spannuten (3) in Umfangsrichtung so schmal (Maß b) ausgebildet sind, daß die anfallenden Späne noch sicher darin aufgenommen werden können.

2. Wälzfräser nach Anspruch 1, **dadurch gekennzeichnet,** daß die Umfangsteilung (T) der Einzelzähne (1) des Wälzfräsers innerhalb einer Schraubenganglinie (6) höchstens etwa doppelt so groß ist, wie die achsiale Zahnteilung (t) innerhalb der Zahnreihen (2), vorzugsweise etwa dem 1,6 bis 1,0-fachen der achsialen Zahnteilung (t) entspricht.

3. Wälzfräser nach Anspruch 1 oder 2 , **dadurch gekennzeichnet,** daß die Freiwinkel im Flankenbereich der Einzelzähne (1) unabhängig vom Freiwinkel im Kopfbereich jeweils nach zerspanungstechnologischen Gesichtspunkten optimal gewählt sind.

4. Wälzfräser nach einem der Ansprüche 1 - 3, **dadurch gekennzeichnet,** daß die zerspanungswirksame Umfangsfläche des Wälzfräsers, also sein Durchmesser (D) und/oder seine achsiale Länge (L), unter Berücksichtigung der Einspannungsmöglichkeiten in der Werkzeugmaschine, möglichst groß gestaltet ist bzw. sind.

5. Wälzfräser nach einem der Ansprüche 1 - 4, **dadurch gekennzeichnet,** daß die Einzelzähne (1) entlang Schraubenganglinien (6) eines mindestens achtfachen bis zu einem fünfzehnfachen Mehrfachgewindes gleichmäßig verteilt angeordnet sind,

Fig. 1

Fig. 2

Europäisches
Patentamt

**EUROPÄISCHER
RECHERCHENBERICHT**

Nummer der Anmeldung

**EP 90 12 4501**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PFAUTER-WÄLZFRÄSEN, 2. erweiterte Auflage, Teil 1: "Verfahren, Maschinen, Werkzeuge, Anwendungstechnik, Wechselräder", 1976, Seiten 182,183,187,196,197,201-203,218,219,234,307, Springer-Verlag, Berlin, DE * Seite 182, rechte Spalte, Zeilen 22-27; Seite 187, rechte Spalte, Zeilen 8-12; Seite 196, rechte Spalte; Seite 197, linke Spalte; Seite 201, Abschnitt 3.1.2.2; Seite 218, Abschnitt 3.1.2.3; Seite 219; Seite 234, linke Spalte, Zeilen 1-8; Seite 307, rechte Spalte, Zeilen 23-35 * <br> − − − | 1-5 | B 23 F 21/16 |
| A | E.G. HOFFMAN: "Fundamentals of Tool Design", 2. Auflage, 1984, Seiten 128-130, Society of Manufacturing Engineers, Dearborn, US * Seite 128; Seite 129, Abschnitt: "Strenght"; Seite 130, Abschnitt: "Chip disposal" * <br> − − − | 1 | |
| A | US-A-2 053 392 (M. CHALLIER) * Seite 2, linke Spalte, Zeilen 58-68, rechte Spalte, Zeilen 13-17; Figuren 1-17 * <br> − − − | 1 | |
| A | DE-A-1 953 339 (W. FERD. KLINGELNBERG SÖHNE) * Figur 2 * <br> − − − | 2 | RECHERCHIERTE SACHGEBIETE (Int. Cl.5) <br><br> B 23 F |
| A | DE-A-1 552 763 (A. KOHLER) * Anspruch 3 * <br> − − − | 1 | |
| A | DE-B-1 264 933 (CARL HURTH MASCHINEN- UND ZAHNRADFABRIK) * Insgesamt * <br> − − − | 1-5 | |
| A | FR-E-8 333 8 (F. RIEBEL) * Seite 2, linke Spalte, Zeilen 7-9; Figuren 1-5 * <br> − − − | 1,2 | |
| | −/− | | |

Der vorliegende Recherchenbericht wurde für alle Patentansprüche erstellt

| Recherchenort | Abschlußdatum der Recherche | Prüfer |
|---|---|---|
| Den Haag | 24 Juni 91 | MOET H.J.K. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 258 827   (G. DE COYE DE CASTELET)<br>* Spalte 1, Zeilen 29-42,56-62; Figur 1 *<br>– – – – – | 1 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| Den Haag | 24 Juni 91 | MOET H.J.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
----------------------------------------------------------
& : Mitglied der gleichen Patentfamilie, übereinstimmendes Dokument